# EUROPÄISCHE PATENTSCHRIFT

(11) **EP 3 422 301 B1**
(45) Veröffentlichungstag und Bekanntmachung des Hinweises auf die Patenterteilung: **11.10.2023**
(21) Anmeldenummer: 18179488.4
(22) Anmeldetag: 25.06.2018
(51) Int. Cl.: H04W 12/08, H04W 4/40, H04W 12/0471, H04W 12/50, H04W 12/63, H04W 12/77, G07C 9/00

(54) **BEDIENUNGSFREIES FAHRZEUG-SCHLIESSSYSTEM MIT EINEM MOBILEN ENDGERÄT**
HANDS-FREE VEHICLE LOCKING SYSTEM WITH A MOBILE TERMINAL
SYSTÈME DE VERROUILLAGE DE VÉHICULE MAINS LIBRES AU MOYEN D'UN TERMINAL MOBILE

(30) Priorität: 28.06.2017 DE 102017114419
(43) Veröffentlichungstag der Anmeldung: 02.01.2019
(73) Patentinhaber: B-ON GmbH, 52070 Aachen (DE)
(72) Erfinder: Frangenheim, Jens, 52353 Merken (DE); Schulz, Florian, 52070 Aachen (DE)
(74) Vertreter: Michalski Hüttermann & Partner Patentanwälte mbB

(56) Entgegenhaltungen:
- EP-A1- 0 905 337
- WO-A1-2017/068202
- CN-A- 106 850 228
- CN-U- 204 168 365
- US-A- 5 973 611
- US-B2- 8 126 450

## Beschreibung

### Technisches Gebiet

Die Erfindung betrifft ein Verfahren zum bedienungsfreien Steuern eines Fahrzeug-Schließsystems mit einem mobilen Endgerät, mit den Schritten Prüfen, ob sich das mobile Endgerät in einem Umgebungsbereich des Fahrzeugs befindet, und bejahendenfalls, Autorisieren des mobilen Endgerätes gegenüber dem Fahrzeug mittels einer mit einem Sicherheitsschlüssel gesicherten drahtlosen Punkt-zu-Punkt Zwei-Wege-Kommunikationsverbindung.

### Hintergrund der Erfindung

Systeme und Verfahren zum Öffnen und Starten eines Fahrzeugs mittels eines mobilen Endgerätes sind aus dem Stand der Technik bekannt und werden beispielsweise unter dem Markennamen Keyless Go beworben, um das Handling von Fahrzeugflotten oder Carsharing-Angeboten effizienter zu gestalten. In der Regel ist ein digitaler Fahrzeugschlüssel des Fahrzeugs in das mobile Endgerät integriert. Der digitale Schlüssel kann über ein Mobilfunknetz auf das mobile Endgerät eines Carsharing-Benutzers übertragen werden. Nach einem Datenaustausch zwischen dem mobilen Endgerät des Benutzers und dem Fahrzeug beispielsweise über eine Nahfeldkommunikationsverbindung kann das Fahrzeug geöffnet und vom Benutzer gestartet werden.

Die US 8 126 450 B2 beschreibt ein System und Verfahren zum Entriegeln eines Fahrzeugs mit einem Mobiltelefon. Dabei werden Signale von dem Mobiltelefon aus überwacht, das Signal wird vom Mobiltelefon empfangen und ein Abstand zwischen dem Mobiltelefon und dem Fahrzeug wird bestimmt. Die Türen des Fahrzeugs werden entriegelt, wenn sich das Mobiltelefon dem Fahrzeug nähert und die Türen des Fahrzeugs werden verriegelt, wenn das Mobiltelefon weiter vom Fahrzeug entfernt wird.

Die WO 2017/068202 A1 betrifft ein Verfahren zur Steuerung der Funktionalität eines mit einem ersten Kommunikationsmodul ausgestatteten Fahrzeugs, umfassend die folgenden Schritte: - Aussenden eines Signals an eine angebrachte Kennung bei Erkennen eines Befehls vom Benutzer mit einem zweiten Kommunikationsmodul, um einen Austausch von elektromagnetischen Signalen zwischen dem ersten Kommunikationsmodul und dem zweiten Kommunikationsmodul zu initiieren, wobei die elektromagnetischen Signale mindestens zwei elektromagnetische Signale mit unterschiedlichen Frequenzen umfassen, - Schätzen von einer Entfernung, die das Fahrzeug von der Kennung auf der Grundlage der jeweiligen Empfangsphasen der mindestens zwei elektromagnetischen Signale trennt, - Steuern der Funktionalität, wenn die geschätzte Entfernung einen vordefinierten Zustand bestätigt.

Die US 5 973 611 A betrifft ein Freisprech-Fernzugriffssystem für Fahrzeuge.

Die EP 0 905 337 A1 beschreibt einen Zündschalter, der mit einem Schlüsselzylinder versehen ist, in den entweder ein knopfartiger Schlüssel oder ein knopfartiger elektronischer Schlüssel eingeführt werden kann.

Allerdings weisen vorgenannte Systeme und Verfahren trotz der oftmals gepriesenen Sicherheit verschiedene Sicherheitslücken auf. Entsprechend sind in den letzten Jahren vermehrt Missbrauchsfälle zu verzeichnen, bei denen Unberechtigte das Fahrzeug geöffnet oder sogar entwendet haben.

### Beschreibung der Erfindung

Ausgehend von dieser Situation ist es eine Aufgabe der vorliegenden Erfindung, ein Verfahren zum bedienungsfreien Steuern eines Fahrzeug-Schließsystems mit einem mobilen Endgerät anzugeben, das im Vergleich zu aus dem Stand der Technik bekannten Verfahren und Systemen wesentlich sicherer und dennoch ebenso einfach zu benutzen ist.

Die Aufgabe wird durch die Merkmale des unabhängigen Anspruchs gelöst. Vorteilhafte Ausgestaltungen sind in den Unteransprüchen wiedergegeben.

Gegenüber aus dem Stand der Technik bekannten Verfahren zum Öffnen bzw. Schließen eines Fahrzeugs zeichnet sich das vorgeschlagene Verfahren dadurch aus, dass das Öffnen bzw. Verschließen des Fahrzeugs erst dann erfolgt, wenn eine zweifache Plausibilitätsprüfung erfolgreich abgeschlossen ist. Zum einen muss sich das mobile Endgerät in dem räumlich beschränkten Umgebungsbereich über eine direkte Kommunikationsverbindung, bei dem ein Verbindungsweg gänzlich ohne Zwischenstationen auskommt, gegenüber dem Fahrzeug autorisiert haben. Zum anderen wird geprüft, ob sich das mobile Endgerät ausgehend von seiner aktuellen Ortsposition innerhalb einer tolerierbaren Distanz zum Fahrzeug befindet. Das bedeutet, dass ein sogenannter Funkreichweitenverlängerungsangriff zum unberechtigten Öffnen des Fahrzeugs, bei dem ein Angreifer eine vermeintliche im Umgebungsbereich befindliche jedoch tatsächlich weiter entfernte Ortsposition sendet, ins Leere gehen würde, da durch vorgenannte Plausibilitätsprüfungen erkannt wird, dass das Fahrzeug unberechtigt geöffnet werden soll.

Mit anderen Worten bietet das vorgeschlagene Verfahren gegenüber den aus dem Stand der Technik bekannten Verfahren und Systemen bei einer ebenso einfachen Bedienung eine wesentlich verbesserte Sicherheit gegenüber einem unberechtigten Öffnen und Starten des Fahrzeugs. Zudem zeichnet sich das vorgeschlagene Verfahren dadurch aus, dass das Fahrzeug grundsätzlich ohne weitere Interaktion eines Benutzers bzw. Fahrers des Fahrzeugs geöffnet bzw. verschlossen werden kann. Denn nachdem das mobile Endgerät innerhalb des Umgebungsbereiches gegenüber dem Fahrzeug autorisiert ist, erfolgt nach Unterschreiten bzw. Überschreiten des vorgegebenen Wertes automatisch das Öffnen bzw. Verschließen des Fahrzeugs. Dazu wird im Rahmen der Erfindung angenommen, dass sich das mobilen Endgerät im Verfügungsbereich des Fahrers bzw. Benutzers des Fahrzeugs befindet. Ebenso kann es möglich sein, dass das Öffnen erst dann erfolgt, wenn der Benutzer auf dem mobilen Endgerät das Öffnen zuvor manuell bestätigt hat.

Das Verfahren lässt sich grundsätzlich bei beliebigen Fahrzeug anwenden, insbesondere jedoch bei einem Kraftfahrzeug, einem Auto, einem Elektrofahrzeug, einem Lieferwagen, einem Bus und/oder bei einem Lastkraftwagen. Das Fahrzeug-Schließsystem weist bevorzugt elektromechanische Einrichtungen auf, um das Fahrzeug, insbesondere eine Tür, ein Fenster und/oder eine Klappe des Fahrzeugs, zu öffnen und/oder zu verschließen. Bevorzugt weist das Fahrzeug eine Steuerung, insbesondere eine computergestützte Steuerung umfassend beispielsweise einen Mikroprozessor, eine speicherprogrammierbare Steuerung und/oder einen Mikrocontroller, auf, welcher ausgebildet ist, einerseits das Fahrzeug-Schließsystem zu steuern, die Ortsposition des Fahrzeugs zu bestimmen und/oder die gesicherte drahtlose Punkt-zu-Punkt Zwei-Wege-Kommunikations-verbindung mit dem mobilen Endgerät aufzubauen und/oder zu prüfen, ob sich das mobile Endgerät in dem Umgebungsbereich zu dem Fahrzeug befindet.

Der Umgebungsbereich ist bevorzugt durch eine Reichweite der drahtlosen Punkt-zu-Punkt Zwei-Wege-Kommunikationsverbindung gekennzeichnet und kann beispielsweise 10 m, 50 m, 100 m oder 250 m betragen. Die drahtlose Kommunikationsverbindung ist bevorzugt durch ein drahtloses lokales Netzwerk, auch als WLAN bezeichnet, insbesondere nach einem IEEE-802.11 Standard, und/oder nach einem Bluetooth-Protokoll, insbesondere nach einem IEEE-802.15.1 Standard, ausgestaltet. Im Falle von WLAN kann im Rahmen einer einfachen und kostengünstigen Ausgestaltung das Fahrzeug ein WLAN-Hotspot und das mobile Endgerät einen entsprechenden WLAN-Client umfassen. Für diesen Fall kann der Schritt Prüfen, ob sich das mobile Endgerät in dem Umgebungsbereich des Fahrzeugs befindet, ein Prüfen des mobilen Endgerätes umfassen, ob es sich mittels eines WLAN-Schlüssels als Sicherheitsschlüssel mit dem WLAN-Hotspot verbinden kann. Der Sicherheitsschlüssel kann als WEP-, WPA- oder WPA2-Schlüssel ausgestaltet sein. Beim Autorisieren des mobilen Endgerätes gegenüber dem Fahrzeug kann zudem geprüft werden, ob eine MAC-Adresse des mobilen Endgerätes seitens des Fahrzeugs autorisiert ist.

Als Punkt-zu-Punkt Verbindung im Rahmen der Erfindung wird eine Direktverbindung im eigentlichen Sinne verstanden, bei dem der Verbindungsweg gänzlich ohne Zwischenstation auskommt und/oder die Kommunikation zwischen dem mobilen Endgerät und dem Fahrzeug ausschließlich in den Layer 1-3 Netzwerkschichten des OSI-Modells erfolgt. Insofern werden keine externen Server, wie beispielsweise Radius-Server, zur Prüfung der Autorisierung benötigt, wodurch die Implementierung des Verfahrens sehr einfach ist. Das Verfahren umfasst bevorzugt den weiteren Schritt Aufbauen der mit dem Sicherheitsschlüssel gesicherten drahtlosen Punkt-zu-Punkt Zwei-Wege-Kommunikations-verbindung zwischen dem mobilen Endgerät und dem Fahrzeug. Das mobile Endgerät ist bevorzugt als Smartphone, Tablet, drahtloses Funk-Endgerät oder Handheld ausgeführt

Die aktuelle Ortsposition des Fahrzeugs und/oder des mobilen Endgerätes wird bevorzugt durch Erhalten eines GPS-, GLONASS-, Galileo-, Beidou- und/oder eines weiteren Satellitensignals erhalten. Dazu umfasst das mobile Endgerät bevorzugt einen Satellitensignalempfänger, insbesondere zum Empfangen des vorgenannten GPS-, GLONASS-, Galileo-, Beidou- und/oder weiteren Satellitensignals. Ebenso kann das Satellitensignal unterschiedlicher Satelliten miteinander verglichen werden, um die Ortsposition und/oder eine Validität der Ortsposition zu bestimmen. Der Begriff "aktuell" bedeutet im Rahmen der Erfindung, dass die Ortsposition zu dem konkreten Zeitpunkt bestimmt wird, wenn die Differenz berechnet wird. Ebenso kann der Begriff "aktuell" mitumfassen, dass die Ortsposition unmittelbar vor dem Berechnen der Differenz bestimmt wurde, beispielsweise 10, 30 oder 60 Sekunden vorher. Der vorgegebene Wert stellt bevorzugt eine tolerierbare Distanz zwischen dem Fahrzeug und dem mobilen Endgerät dar, beispielsweise 5 m, 10 m, 50 m oder 100 m, innerhalb dessen das Öffnen bzw. Schließen des Fahrzeugs bedienungsfrei erfolgt.

Nach einer bevorzugten Weiterbildung umfasst das Verfahren den Schritt Senden einer aktuellen Ortsposition des mobilen Endgerätes von dem mobilen Endgerät über die gesicherte drahtlose Punkt-zu-Punkt Zwei-Wege-Kommunikationsverbindung an das Fahrzeug. In diesem Zusammenhang ist nach einer bevorzugten Weiterbildung zudem bevorzugt, dass das Senden der aktuellen Ortsposition des mobilen Endgerätes nur dann erfolgt, wenn sich die Ortsposition des mobilen Endgerätes ändert oder eine durch einen Bewegungssensor des mobilen Endgerätes bestimmte Ortsposition gleichzeitig mit einer aus einem von dem mobilen Endgerät empfangenen Satellitensignal bestimmten Ortsposition ändert. Bevorzugt umfasst das mobile Endgerät den Bewegungssensor, durch welchen sich bestimmen lässt, ob sich die Ortsposition des mobilen Endgerätes ändert. Durch die vorgenannte Weiterbildung lässt sich sicherstellen, dass das Fahrzeug nur dann geöffnet oder verschlossen wird, wenn sich der Fahrer auf das Fahrzeug zu oder von dem Fahrzeug weg bewegt, jedenfalls nicht in einer stationären Position verharrt.

Ausgehend von dieser Erkenntnis ist nach einer bevorzugten Weiterbildung vorgesehen, dass das Verfahren den Schritt Öffnen oder Verschließen des Fahrzeugs falls sich in dem Umgebungsbereich die Differenz zwischen der aktuellen Ortsposition des Fahrzeugs und der aktuellen Ortsposition des mobilen Endgerätes verringert oder vergrößert umfasst. Ebenso wie der zuvor beschriebene Verfahrensschritt lässt sich auch durch diese Weiterbildung die Sicherheit des vorgeschlagenen Verfahrens dadurch erhöhen, dass das Öffnen oder Verschließen des Fahrzeugs nur dann erfolgt, wenn sich beispielsweise der Fahrer dem Fahrzeug nähert oder sich von diesem entfernt. Eine Veränderung der Ortsposition des Fahrzeugs kann durch eine Drehbewegung eines Fahrzeugreifens detektiert werden.

Nach einer anderen bevorzugten Weiterbildung umfasst das Verfahren den Schritt nach dem Öffnen oder Verschließen des Fahrzeugs, Übertragen einer Mitteilung von dem Fahrzeug an das mobile Endgerät und Ausgeben der Mitteilung als optisches, akustisches und/oder Vibrationssignal auf dem mobilen Endgerät. Falls der Fahrer aus dem Fahrzeug aussteigt und in der Folge den Umgebungsbereich verlässt, wird er über das erfolgte bzw. erfolgreiche Verschließen des Fahrzeugs informiert. Da der Fahrer zusammen mit dem mobilen Endgerät den Umgebungsbereich, in dem die gesicherte drahtlose Punkt-zu-Punkt Zwei-Wege-Kommunikationsverbindung zwischen dem mobilen Endgerät und Fahrzeug aufgebaut ist, verlassen hat, wird die Mitteilung bevorzugt mittels einer Mobilfunknetzverbindung von dem Fahrzeug an das mobile Endgerät übertragen.

Nach einer noch weiter bevorzugten Ausgestaltung umfasst das Verfahren den Schritt: Bei Öffnen des Fahrzeugs, Übertragen einer Mitteilung von dem Fahrzeug an das mobile Endgerät, Ausgeben der Mitteilung als optisches, akustisches und/oder als Vibrationssignal auf dem mobilen Endgerät, und, bei Quittierung der Mitteilung, Übertragen einer Schließmitteilung insbesondere über ein Mobilfunknetz von dem mobilen Endgerät an das Fahrzeug und Verschließen des Fahrzeugs durch das Fahrzeug-Schließsystem. Sollte es dennoch zu einem unberechtigten Öffnen des Fahrzeugs kommen, hat der Fahrer gemäß der vorgeschlagenen Weiterbildung die Möglichkeit, durch Quittierung der Mitteilung das Verschließen des Fahrzeugs zu bewirken.

Nach einer anderen bevorzugten Weiterbildung ist zum Erhöhen der Sicherheit zudem bevorzugt, dass das Verfahren den Schritt: Nach dem Öffnen des Fahrzeugs, Prüfen ob sich ein Fahrer auf einem Fahrersitz des Fahrzeugs befindet und bejahendenfalls Freigeben einer Zündung des Fahrzeugs zum Starten des Fahrzeugs, umfasst. Die Zündungsfreigabe erfolgt also erst dann, nachdem der Fahrer auf dem Fahrersitz Platz genommen hat.

Nach einer weiteren Ausgestaltung ist in diesem Zusammenhang bevorzugt, dass das Verfahren den Schritt: Prüfen ob eine gesicherte Nahfeldkommunikationsverbindung zwischen dem mobilen Endgerät und dem Fahrzeug in einem Fahrzeuginnenraum möglich ist und bejahendenfalls Freigeben einer Zündung des Fahrzeugs zum Starten des Fahrzeugs, und/oder Triggern der Nahfeldkommunikationsverbindung durch das Fahrzeug mittels einer gesicherten Code-Übermittelung an das mobile Endgerät umfasst. Während bei dem zuvor beschriebenen Verfahrensschritten zum Autorisieren und Öffnen bzw. Verschließen des Fahrzeugs eine drahtlose Punkt-zu-Punkt Verbindung beispielsweise mittels WLAN oder Bluetooth bevorzugt war, stellt der nunmehr vorgeschlagene Verfahrensschritt auf eine Nahfeldkommunikationsverbindung beispielsweise nach dem NFC-Protokoll oder einem anderen kurzreichweitigen Signal mit einer Reichweite von beispielsweise 1 m ab. Nachdem festgestellt wurde, dass sich das mobile Endgerät beispielsweise in einer Hosentasche des Fahrers im Fahrzeuginnenraum befindet, kann Zündungsfreigabe erteilt werden. Durch eine solche Nahfeldkommunikationsverbindung lässt sich ausschließen, dass ein unberechtigter Dritter eine Zündungsfreigabe zum Starten des Fahrzeugs erteilen kann. In diesem Zusammenhang kann vorgesehen sein, dass das Fahrzeug das Aufbauen der Nahfeldkommunikationsverbindung triggert, insbesondere wenn sich das mobile Endgerät innerhalb der vordefinierten Entfernung zu dem Fahrzeuginnenraum befindet.

Nach einer noch weiteren bevorzugten Ausgestaltung umfasst das Verfahren den Schritt: falls sich das mobile Endgerät nicht in dem Umgebungsbereich befindet, Verschließen des Fahrzeugs durch das Fahrzeug-Schließsystem. Wie zuvor angesprochen, wird dadurch erreicht, dass das Fahrzeug automatisch verschlossen wird, wenn sich der Fahrer mit dem mobilen Endgerät aus dem Umgebungsbereich heraus entfernt, beispielsweise nachdem er aus dem Fahrzeug ausgestiegen ist.

Wie ebenfalls zuvor angesprochen, umfasst das Verfahren weiterhin den bevorzugten Schritt: Bestimmen der Ortsposition des mobilen Endgerätes und/oder des Fahrzeugs mittels eines durch das mobile Endgerät und/oder das Fahrzeug aktuell empfangenen Satellitensignals. Bevorzugt weist das mobile Endgerät und/oder das Fahrzeug einen entsprechenden Satellitensignal-Empfänger auf.

Nach einer noch weiter bevorzugten Ausgestaltung umfasst das Verfahren den Schritt: Erzeugen des Sicherheitsschlüssels, insbesondere eines TLS- oder PGP-Zertifikats, im Fahrzeug, Anzeigen des Sicherheitsschlüssels durch das Fahrzeug, Einscannen des durch das Fahrzeug angezeigten Sicherheitsschlüssels durch das mobile Endgerät, und/oder Übertragen des Sicherheitsschlüssels von dem Fahrzeug auf das mobile Endgerät. Durch die vorgeschlagenen Schritte lässt sich der Sicherheitsschlüssel durch den Fahrer des Fahrzeugs in einfacher Weise selbst erzeugen und/oder austauschen, ohne dass es Hilfe Dritter wie aufwändiger Serverinfrastrukturen bedarf. Der Schlüssel kann am Kombiinstrument des Fahrzeugs angezeigt werden und von dort, beispielsweise über einen QR-Code, von dem mobilen Endgerät gescannt und auf diesem installiert werden. Derart bleibt eine Integrität und Vertraulichkeit des Sicherheitsschlüssels erhalten, ohne dass unberechtigte Dritte Zugriff auf den Sicherheitsschlüssel erlangen.

Nach einer weiteren bevorzugten Ausgestaltung umfasst das Verfahren den Schritt: bei Nichtverfügbarkeit der aktuellen Ortsposition des mobilen Endgerät, nach Erhalten einer manuellen Bestätigung auf dem Mobilen Endgerät Senden einer manuell bestätigten Ortsposition des mobilen Endgerätes oder einer zuletzt bekannten Ortsposition des mobilen Endgerätes von dem mobilen Endgerät über die gesicherte drahtlose Punkt-zu-Punkt Zwei-Wege-Kommunikations-verbindung als aktuelle Ortsposition des mobilen Endgerätes an das Fahrzeug. Sofern keine aktuelle Ortsposition des mobilen Endgerätes verfügbar ist, beispielsweise weil sich der Fahrer mit dem mobilen Endgerät innerhalb eines Gebäudes befindet und insofern keinen Satellitensignalempfang zum Erhalten der Ortsposition hat, kann durch eine manuelle Bestätigung auf dem mobilen Endgerät die Ortsposition manuell als aktuelle Ortsposition bestätigt werden oder aber auf eine zuletzt bekannte Ortsposition zurückgegriffen werden. Analoges gilt bei Nicht-Verfügbarkeit der aktuellen Ortsposition des Fahrzeugs.

### Kurze Beschreibung der Zeichnungen

Nachfolgend wird die Erfindung unter Bezugnahme auf die anliegende Zeichnung anhand eines bevorzugten Ausführungsbeispiels näher erläutert.

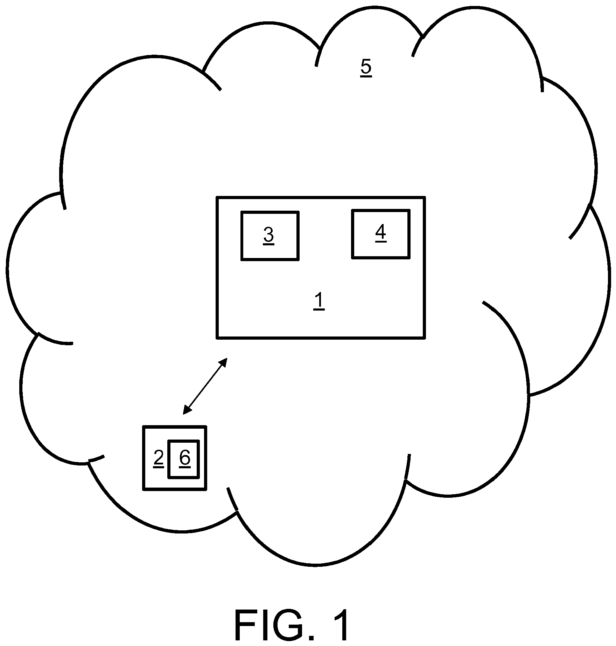

In der Zeichnung zeigen
- Fig. 1: eine schematische Darstellung mit einem Fahrzeug und einem mobilen Endgerät zum Ausführen eines Verfahrens nach einem bevorzugten Ausführungsbeispiel der Erfindung in einer schematischen Ansicht.

### Detaillierte Beschreibung des Ausführungsbeispiels

Fig. 1 zeigt ein Fahrzeug 1 und ein als Smartphone ausgestaltetes mobiles Endgerät 2 zum Ausführen des vorgeschlagenen Verfahrens gemäß einem bevorzugten Ausführungsbeispiel der Erfindung in einer schematischen Ansicht.

Das Fahrzeug 1 weist ein Fahrzeug-Schließsystem 3 zum Öffnen und Verschließen des Fahrzeugs 1 auf, welches eingerichtet ist, nicht weiter gezeigte Fenster, Türen und Heccklappen des Fahrzeugs zu öffnen bzw. zu schließen. Das Fahrzeug 1 weist ferner eine computerbasierte Steuerung 4 auf, welche eingerichtet ist, mit dem Fahrzeug-Schließsystem 3 zum Öffnen bzw. Verschließen des Fahrzeugs 1 zu kommunizieren. Die Steuerung 4 weist zudem ein WLAN-Kommunikationsmodul zum Aufbauen eines lokalen Funknetzes gemäß einem IEEE-802.11 Standard, eine Einrichtung zum Bestimmen einer Ortsposition des Fahrzeugs 1 durch Empfangen eines globalen Satellitennavigationssignals von einem GPS-, GLONASS-, Galileo- und/oder Beidou-Satellitennavigationssystem und ein GSM-Kommunikationsmodul zum Austauschen von Daten mittels eines Mobilfunkstandards auf. Das Smartphone 2 ist ebenso mit einem WLAN-Kommunikationsmodul, einem Bewegungssensor (6), einer Einrichtung zum Bestimmen einer Ortsposition des Smartphones 2 sowie einem GSM-Kommunikationsmodul versehen.

Durch das WLAN-Kommunikationsmodul des Fahrzeugs 1 wird ein WLAN-Hotspot aufgebaut, der sich in einem Umgebungsbereich 5 um das Fahrzeug 1 herum erstreckt. In einem folgenden Verfahrensschritt wird durch das Smartphone 2 geprüft, ob sich das Smartphone 2 in dem Umgebungsbereich 5 des Fahrzeugs 1 befindet. Bejahendenfalls autorisiert sich das Smartphone 2 gegenüber dem Fahrzeug 1 mittels eines WPA2-Sicherheitsschlüssels zum Aufbauen einer gesicherten drahtlosen Punkt-zu-Punkt Zwei-Wege-Kommunikationsverbindung zwischen dem Smartphone 2 und dem Fahrzeug 1.

In einem weiteren Verfahrensschritt bestimmt sowohl das Smartphone 2 als auch das Fahrzeug 1 mittels der jeweiligen Einrichtung zum Bestimmen der Ortsposition die jeweils aktuelle Ortsposition. Das Smartphone 2 sendet die derart bestimmte aktuelle Ortsposition über die gesicherte drahtlose Punkt-zu-Punkt Zwei-Wege-Kommunikations-verbindung an das Fahrzeug 1. Die Steuerung 4 des Fahrzeugs 1 bestimmt daraufhin eine Differenz zwischen der aktuellen Ortsposition des Fahrzeugs 1 und der aktuellen Ortsposition des Smartphones 2, um zu prüfen, ob die Differenz einen vorgegebenen Wert unterschreitet oder überschreitet. Bei Unterschreiten des vorgegebenen Wertes veranlasst die Steuerung 4, dass das Fahrzeug-Schließsystem 3 das Fahrzeug 1 öffnet. Andernfalls, falls die Differenz den vorgegebenen Wert überschreitet, veranlasst die Steuerung 4, dass das Fahrzeug-Schließsystem 3 das Fahrzeug 1 verschließt.

Durch das vorgeschlagene Verfahren wird durch einen zweistufigen Prozess sichergestellt, dass nur ein Berechtigter, in der Regel ein Fahrer des Fahrzeugs 1 und Eigentümer des Smartphones 2, das Fahrzeug 1 öffnen und in der Folge starten kann. Dazu wird das Smartphone 2 zunächst gegenüber dem Fahrzeug 1 anhand des Sicherheitsschlüssels autorisiert und, wenn sich das Smartphone 2 innerhalb einer tolerierbaren Distanz als Differenz zwischen aktueller Ortsposition des Fahrzeugs 1 und aktueller Ortsposition des Smartphones 2 befindet, das Fahrzeug 1 geöffnet. Derart ist sichergestellt, dass nur der Berechtigte Zugang zum Fahrzeug 1 erhält.

Das Öffnen bzw. Verschließen des Fahrzeugs 1 kann nur dann erfolgen, wenn sich die Distanz des Smartphones 2 zum Fahrzeug 1 verringert bzw. vergrößert, also sich die Differenz zwischen aktueller Ortsposition des Fahrzeugs 1 und aktueller Ortsposition des Smartphones 2 verringert bzw. vergrößert. Ebenso kann vorgesehen sein, falls sich der Eigentümer des Smartphones 2 aus dem Umgebungsbereich 5 hinausbewegt, wodurch die gesicherte drahtlose Punkt-zu-Punkt Zwei-Wege-Kommunikationsverbindung zwischen Smartphone 2 und Fahrzeug 1 unterbrochen wird, dass die Steuerung 4 das Verschließen des Fahrzeugs 1 mittels des Fahrzeug-Schließsystems 3 bewirkt.

Beim Öffnen oder Verschließen des Fahrzeugs 1 kann ebenso eine Mitteilung von der Steuerung 4 des Fahrzeugs 1 an das Smartphone 2 verschickt werden und als optisches, akustisches und/oder Vibrationssignal auf dem Smartphone 2 ausgegeben werden. Derart wird der Eigentümer des Smartphones 2 über das Öffnen bzw. Verschließen des Fahrzeugs 1 informiert. Sofern doch das Öffnen des Fahrzeugs 1 durch einen unberechtigten Dritten erfolgt sein sollte, kann nach Quittierung der Mitteilung durch den Berechtigten auf dem Smartphone 2 eines Schließmitteilung von dem Smartphone 2 an das Fahrzeug 1 gesendet werden, aufgrund derer die Steuerung 4 das Verschließen des Fahrzeugs 1 durch das Fahrzeug-Schließsystem 3 bewirkt. Die Mitteilung kann, da sich das Smartphone 2 außerhalb des Umgebungsbereiches 5 befinden kann, über das GSM-Kommunikationsmodul des Smartphones 2 an das Fahrzeug 1 gesendet werden

In vergleichbarer Weise kann eine Zündung des Fahrzeugs 1 zum Starten des Fahrzeugs 1 erst dann freigegeben werden, wenn sich der Fahrer auf einem Fahrersitz des Fahrzeugs 1 befindet. Dazu wird durch Aufbauen einer gesicherten Nahfeldkommunikationsverbindung mittels eines NFC-Protokolls verifiziert ob sich das Smartphone 2 innerhalb einer vordefinierten Entfernung von beispielsweise 1 m zu einem Fahrzeuginnenraum befindet. Eine Triggerung der Nahfeldkommunikationsverbindung kann durch das Fahrzeug 1 mittels einer gesicherten Code-Übermittelung analog zu aus dem Stand der Technik bekannten bei Funktürschlössern erfolgen, insbesondere nur durch das eigene Fahrzeug 1.

Der Sicherheitsschlüssel, der ebenso ein TLS- oder PGP-Zertifikat umfassen kann, kann durch die Steuerung 4 des Fahrzeugs 1 in einfacher Weise und unabhängig von externen Serverinfrastrukturen erzeugt und an einem Kombiinstrument des Fahrzeugs 1 anzeigt werden. Von dem Kombiinstrument kann der so erzeugte Sicherheitsschlüssel durch das Smartphone 2 eingescannt und entsprechend auf das Smartphone 2 übertragen und dort installiert werden.

Sollte eine aktuelle Ortsposition des Smartphones 1 oder des Fahrzeugs 1 nicht verfügbar sein, beispielsweise weil sich der Eigentümer und Fahrer des Smartphones 2 bzw. des Fahrzeugs 1 innerhalb eines Gebäudes befindet, kann nach Erhalten einer manuellen Bestätigung auf dem Smartphone 2 eine manuell bestätigte Ortsposition des Smartphones 2 als aktuelle Ortsposition des Smartphones 2 an das Fahrzeug 1 übertragen werden. Alternativ kann auch eine zuletzt bekannte Ortsposition des Smartphones 2, nach entsprechender manueller Bestätigung auf dem Smartphone 2, von dem Smartphone 2 über die gesicherte drahtlose Punkt-zu-Punkt Zwei-Wege-Kommunikationsverbindung als aktuelle Position an das Fahrzeug 1 übertragen werden.

Das beschriebene Ausführungsbeispiel ist lediglich ein Beispiel, das im Rahmen der Ansprüche auf vielfältige Weise modifiziert und/oder ergänzt werden kann. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Fahrzeug | 1 |
| Smartphone, mobiles Endgerät | 2 |
| Fahrzeug-Schließsystem | 3 |
| Steuerung | 4 |
| Umgebungsbereich | 5 |
| Bewegungssensor | 6 |

## Patentansprüche

1. Verfahren zum bedienungsfreien Steuern eines Fahrzeug-Schließsystems (3) mit einem mobilen Endgerät (2), wobei
das mobile Endgerät (2) einen Satellitensignalempfänger zum Empfangen eines GPS-, GLONASS-, Galileo-, Beidou- und/oder weiteren Satellitensignals zum Bestimmen einer aktuellen Ortsposition des mobilen Endgerätes (2) umfasst, mit den Schritten:
Erzeugen eines Sicherheitsschlüssels im Fahrzeug (1), wobei der Sicherheitsschlüssel ein TLS- oder PGP-Zertifikat umfasst,
Anzeigen des Sicherheitsschlüssels durch das Fahrzeug (1),
Einscannen des durch das Fahrzeug (1) angezeigten Sicherheitsschlüssels durch das mobile Endgerät (2),
Prüfen, ob sich das mobile Endgerät (2) in einem Umgebungsbereich (5) des Fahrzeugs (1) befindet,
Bejahendenfalls, Autorisieren des mobilen Endgerätes (2) gegenüber dem Fahrzeug (1) mittels einer mit dem Sicherheitsschlüssel gesicherten drahtlosen Punkt-zu-Punkt Zwei-Wege-Kommunikationsverbindung,
Senden der aktuellen Ortsposition des mobilen Endgerätes (2) von dem mobilen Endgerät (2) über die gesicherte drahtlose Punkt-zu-Punkt Zwei-Wege-Kommunikations-verbindung an das Fahrzeug (1),
Öffnen oder Verschließen des Fahrzeugs (1) durch das Fahrzeug-Schließsystem (3) falls in dem Umgebungsbereich (5) eine Differenz zwischen einer aktuellen Ortsposition des Fahrzeugs (1) und der aktuellen Ortsposition des mobilen Endgerätes (2) einen vorgegebenen Wert unterschreitet oder überschreitet, und
nach dem Öffnen oder Verschließen des Fahrzeugs (1), Übertragen einer Mitteilung von dem Fahrzeug (1) an das mobile Endgerät (2) und Ausgeben der Mitteilung als optisches, akustisches und/oder als Vibrationssignal auf dem mobilen Endgerät (2).

2. Verfahren nach dem vorhergehenden Anspruch, wobei das Senden der aktuellen Ortsposition des mobilen Endgerätes (2) nur dann erfolgt, wenn sich die Ortsposition des mobilen Endgerätes (2) ändert oder eine durch einen Bewegungssensor (6) des mobilen Endgerätes (2) bestimmte Ortsposition gleichzeitig mit einer aus einem von dem mobilen Endgerät (2) empfangenen Satellitensignal bestimmten Ortsposition ändert.

3. Verfahren nach einem der vorhergehenden Ansprüche, mit dem Schritt:
Öffnen oder Verschließen des Fahrzeugs (1) falls sich in dem Umgebungsbereich (5) die Differenz zwischen der aktuellen Ortsposition des Fahrzeugs (1) und der aktuellen Ortsposition des mobilen Endgerätes (2) verringert oder vergrößert.

4. Verfahren nach einem der vorhergehenden Ansprüche, mit dem Schritt:
Bei Öffnen des Fahrzeugs (1), Übertragen einer Mitteilung von dem Fahrzeug (1) an das mobile Endgerät (2), Ausgeben der Mitteilung als optisches, akustisches und/oder als Vibrationssignal auf dem mobilen Endgerät (2), und, bei Quittierung der Mitteilung, Übertragen einer Schließmitteilung von dem mobilen Endgerät (2) an das Fahrzeug (1) und Verschließen des Fahrzeugs (1) durch das Fahrzeug-Schließsystem (3).

5. Verfahren nach einem der vorhergehenden Ansprüche, mit dem Schritt:
Nach dem Öffnen des Fahrzeugs (1), Prüfen ob sich ein Fahrer auf einem Fahrersitz des Fahrzeugs (1) befindet und bejahendenfalls Freigeben einer Zündung des Fahrzeugs (1) zum Starten des Fahrzeugs (1).

6. Verfahren nach einem der vorhergehenden Ansprüche, mit dem Schritt:
Prüfen ob eine gesicherte Nahfeldkommunikationsverbindung zwischen dem mobilen Endgerät (2) und dem Fahrzeug (1) in einem Fahrzeuginnenraum (1) möglich ist und bejahendenfalls Freigeben einer Zündung des Fahrzeugs (1) zum Starten des Fahrzeugs (1), und/oder
Triggern der Nahfeldkommunikationsverbindung durch das Fahrzeug (1) mittels einer gesicherten Code-Übermittelung an das mobile Endgerät (2).

7. Verfahren nach einem der vorhergehenden Ansprüche, mit dem Schritt:
falls sich das mobile Endgerät (2) nicht in dem Umgebungsbereich (5) befindet, Verschließen des Fahrzeugs (1) durch das Fahrzeug-Schließsystem (3).

8. Verfahren nach einem der vorhergehenden Ansprüche, mit dem Schritt:
Bestimmen der Ortsposition des mobilen Endgeräts (2) und/oder des Fahrzeugs (1) mittels eines durch das mobile Endgerät (2) und/oder das Fahrzeug (1) aktuell empfangenen Satellitensignals.

9. Verfahren nach einem der vorhergehenden Ansprüche, mit dem Schritt:
bei Nichtverfügbarkeit der aktuellen Ortsposition des mobilen Endgerätes (2), nach Erhalten einer manuellen Bestätigung auf dem mobilen Endgerät (2) Senden einer manuell bestätigten Ortsposition des mobilen Endgerätes (2) oder einer zuletzt bekannten Ortsposition des mobilen Endgerätes (2) von dem mobilen Endgerät (2) über die gesicherte drahtlose Punkt-zu-Punkt Zwei-Wege-Kommunikationsverbindung als aktuelle Ortsposition des mobilen Endgerätes (2) an das Fahrzeug (1).

## Claims

1. A method for the intervention-free control of a vehicle locking system (3) using a mobile terminal device (2), wherein
the mobile terminal device (2) comprises a satellite signal receiver for receiving a GPS, GLONASS, Galileo, Beidou and/or further satellite signal for determining a current location position of the mobile terminal device (2), comprising the following steps:
generating a security key in the vehicle (1), wherein the security key comprises a TLS or PGP certificate,
displaying the security key by means of the vehicle (1),
scanning in the security key displayed by the vehicle (1) by means of the mobile terminal device (2),
checking whether the mobile terminal device (2) is located in a surrounding area (5) of the vehicle (1),
if so, authorizing the mobile terminal device (2) to the vehicle (1) by means of a secured wireless point-to-point, two-way communication connection secured with the security key,
transmitting the current location position of the mobile terminal device (2) from the mobile terminal device (2) via the secured wireless point-to-point, two-way communication connection to the vehicle (1),
opening or locking the vehicle (1) by means of the vehicle locking system (3) if a difference between a current location position of the vehicle (1) and the current location position of the mobile terminal device (2) falls below or exceeds a predefined value in the surrounding area (5), and
after opening or locking the vehicle (1), transmitting a notification from the vehicle (1) to the mobile terminal device (2) and outputting the notification as a visual, acoustic and/or vibration signal on the mobile terminal device (2).

2. The method according to the preceding claim, wherein the current location position of the mobile terminal device (2) is transmitted only if the location position of the mobile terminal device (2) changes or a location position determined by a motion sensor (6) of the mobile terminal device (2) changes at the same time as a location position determined from a satellite signal received by the mobile terminal device (2).

3. The method according to any one of the preceding claims, comprising the step of:
opening or locking the vehicle (1) if the difference between the current location position of the vehicle (1) and the current location position of the mobile terminal device (2) decreases or increases in the surrounding area (5).

4. The method according to any one of the preceding claims, comprising the step of:
when the vehicle (1) is opened, transmitting a notification from the vehicle (1) to the mobile terminal device (2), outputting the notification as a visual, acoustic and/or vibration signal on the mobile terminal device (2), and, when the notification is acknowledged, transmitting a locking notification from the mobile terminal device (2) to the vehicle (1), and locking the vehicle (1) by means of the vehicle locking system (3).

5. The method according to any one of the preceding claims, comprising the step of:
after opening the vehicle (1), checking whether a driver is located on a driver's seat of the vehicle (1) and, if so, enabling an ignition of the vehicle (1) to start the vehicle (1).

6. The method according to any one of the preceding claims, comprising the step of:
checking whether a secured near-field communication connection is possible between the mobile terminal device (2) and the vehicle (1) in a vehicle interior (1) and, if so, enabling an ignition of the vehicle (1) to start the vehicle (1), and/or
triggering the near-field communication connection by means of the vehicle (1) by means of a secured code transmission to the mobile terminal device (2).

7. The method according to any one of the preceding claims, comprising the step of:
if the mobile terminal device (2) is not located in the surrounding area (5), locking the vehicle (1) by means of the vehicle locking system (3).

8. The method according to any one of the preceding claims, comprising the step of:
determining the location position of the mobile terminal device (2) and/or the vehicle (1) by means of a satellite signal currently received by the mobile terminal device (2) and/or the vehicle (1).

9. The method according to any one of the preceding claims, comprising the step of:
if the current location position of the mobile terminal device (2) is unavailable, after receiving a manual confirmation on the mobile terminal device (2), transmitting to the vehicle (1) a manually confirmed location position of the mobile terminal device (2) or a last-known location position of the mobile terminal device (2) from the mobile terminal device (2) via the secured wireless point-to-point, two-way communication connection as the current location position of the mobile terminal device (2).

## Revendications

1. Procédé de commande mains libres d'un système de fermeture de véhicule (3) avec un appareil terminal mobile (2), dans lequel
l'appareil terminal mobile (2) comprend un récepteur de signaux satellites pour la réception d'un signal GPS, GLONASS, Galiléo, Beidou et/ou autre signal satellite permettant la détermination d'une position locale actuelle de l'appareil terminal mobile (2), avec les étapes :
de création d'une clé de sécurité dans le véhicule (1), où la clé de sécurité comprend un certificat TLS ou un certificat PGP,
d'affichage de la clé de sécurité par le véhicule (1),
de balayage de la clé de sécurité affichée par le véhicule (1) par l'appareil terminal mobile (2),
de vérification si l'appareil terminal mobile (2) se trouve dans une zone d'environnement (5) du véhicule (1),
dans l'affirmative, d'autorisation de l'appareil terminal mobile (2), à la place du véhicule (1), au moyen d'une liaison de communication bidirectionnelle point par point sans fil sécurisée avec la clé de sécurité,
d'envoi de la position locale actuelle de l'appareil terminal mobile (2) à partir de l'appareil terminal mobile (2) vers le véhicule (1) par le biais de la liaison de communication bidirectionnelle point par point sans fil sécurisée,
d'ouverture ou de fermeture du véhicule (1) par le système de fermeture de véhicule (3) dans le cas où, dans la zone d'environnement (5), une différence entre une position locale actuelle du véhicule (1) et la position locale actuelle de l'appareil terminal mobile (2) est en-dessous ou dépasse une valeur prédéterminée, et
après l'ouverture ou la fermeture du véhicule (1), de transmission d'une information du véhicule (1) vers l'appareil terminal mobile (2) et d'émission de l'information sous forme d'un signal optique, acoustique et/ou vibrationnel sur l'appareil terminal mobile (2).

2. Procédé selon la revendication précédente, dans lequel l'émission de la position locale actuelle de l'appareil terminal mobile (2) n'a lieu que si la position locale de l'appareil terminal mobile (2) se modifie ou une position locale déterminée par un capteur de mouvements (6) de l'appareil terminal mobile (2) se modifie simultanément avec une position locale déterminée à partir d'un signal satellite reçu à partir de l'appareil terminal mobile (2).

3. Procédé selon l'une des revendications précédentes, avec l'étape :
D'ouverture ou de fermeture du véhicule (1) dans le cas où, dans la zone d'environnement (5), une différence entre une position locale actuelle du véhicule (1) et la position locale actuelle de l'appareil terminal mobile (2) diminue ou s'agrandit.

4. Procédé selon l'une des revendications précédentes, avec l'étape :
lors de l'ouverture du véhicule (1), la transmission d'une information du véhicule (1) vers l'appareil terminal mobile (2), l'émission de l'information sous forme d'un signal optique, acoustique et/ou vibrationnel sur l'appareil terminal mobile (2), et, lors de la prise en compte de l'information, la transmission d'une information de fermeture de l'appareil terminal mobile (2) vers le véhicule (1) et la fermeture du véhicule (1) par le système de fermeture de véhicule (3).

5. Procédé selon l'une des revendications précédentes, avec l'étape :
après l'ouverture du véhicule (1), la vérification si un conducteur se trouve sur un siège conducteur du véhicule (1) et dans l'affirmative, la libération d'un allumage du véhicule (1) pour le démarrage du véhicule (1).

6. Procédé selon l'une des revendications précédentes, avec l'étape :
de vérification si une liaison de communication par champ proche sécurisée est possible entre l'appareil terminal mobile (2) et le véhicule (1) dans un espace intérieur de véhicule (1) et dans l'affirmative, la libération d'un allumage du véhicule (1) pour le démarrage du véhicule (1), et/ou
de déclenchement de la liaison de communication en champ proche par le véhicule (1) au moyen d'une transmission de code sécurisée vers l'appareil terminal mobile (2).

7. Procédé selon l'une des revendications précédentes, avec l'étape :
dans le cas où l'appareil terminal mobile (2) ne se trouve pas dans la zone d'environnement (5), la fermeture du véhicule (1) par le système de fermeture de véhicule (3).

8. Procédé selon l'une des revendications précédentes, avec l'étape :
De détermination de la position locale de l'appareil terminal mobile (2) et/ou du véhicule (1) au moyen d'un signal satellite reçu actuel par l'appareil terminal mobile (2) et/ou le véhicule (1).

9. Procédé selon l'une des revendications précédentes, avec l'étape :
en cas d'indisponibilité de la position locale actuelle de l'appareil terminal mobile (2), après l'obtention de la confirmation manuelle sur l'appareil terminal mobile (2), d'envoi d'une position locale confirmée manuellement de l'appareil terminal mobile (2) ou d'une position locale de l'appareil terminal mobile (2) connue en dernier lieu, à partir de l'appareil terminal mobile (2) vers le véhicule (1), par le biais de la liaison de communication bidirectionnelle point par point sans fil sécurisée en tant que position locale de l'appareil terminal mobile (2).
